# EUROPEAN PATENT SPECIFICATION

(11) **EP 0 890 488 B1**
(45) Date of publication and mention of the grant of the patent: **05.11.2003**
(21) Application number: 98112448.0
(22) Date of filing: 06.07.1998
(51) Int. Cl.: B60R 21/32

(54) **A system for controlling the activation of an air-bag in a motor-vehicle**
Einrichtung zur Steuerung der Aktivierung eines Luftkissens in einem Kraftfahrzeug
Système de contrôle du déclenchement d'un coussin gonflable dans un véhicule automobile

(30) Priority: 07.07.1997 IT TO970601
(43) Date of publication of application: 13.01.1999
(73) Proprietor: FIAT AUTO S.p.A., 10135 Torino (IT)
(72) Inventor: Troisi, Roberto, 10141 Torino (IT)
(74) Representative: Quinterno, Giuseppe

(56) References cited:
- WO-A-86/05149
- DE-A- 4 218 030
- DE-A- 4 424 878
- DE-A- 4 444 828
- FR-A- 2 590 527
- GB-A- 2 304 540
- US-A- 4 565 919

## Description

The present invention relates to a system for controlling the activation of an air-bag for protecting the driver and/or the front passenger of a motor-vehicle, of the kind defined in the preamble of Claim 1.

DE-A-44 24 878 discloses a system of that kind, aiming at better protecting the occupants of a motor-vehicle in case of a side impact. To that end, the prior system disclosed in said document includes lateral sensors which monitor the regions on both sides of the motor-vehicle and which provide signals usable to trigger lateral air-bags when the distance of another motor-vehicle or another kind of obstacle with respect to one side of the vehicle becomes less than a preset value.

WO-A-86 05149 discloses a system according to the preamble of claim 1 to protect vehicle passengers in case of a frontal or rear collision of the vehicle. This system includes sensor means which measure the distance or speed of the vehicle in relation to an object moving within a certain distance range in front of or behind the vehicle.

US-A-4 565 919 discloses a resistive crack detector for an electrically conductive windshield, for interrupting the power applied thereto when the resistance of a conductive element of the windshield is indicative of a crack.

The object of the invention is to prevent or at least to minimize the injuries which may be caused to the driver and/or to the front passenger of a motor vehicle because of a foreign body striking the windscreen of the motor vehicle.

This object is achieved, according to the invention, by a system of the type indicated above, having the features defined in Claim 1.

The sensor associated with the windscreen is a sensor which supplies a signal when the windscreen is broken.

Further characteristics and advantages of the invention will become clear from the following detailed description given purely by way of non-limiting example, with reference to the appended drawings, in which:
Figure 1 is a block diagram of a system according to the invention, and
Figure 2 shows a motor-vehicle windscreen provided with a breakage sensor usable in a system according to the invention.

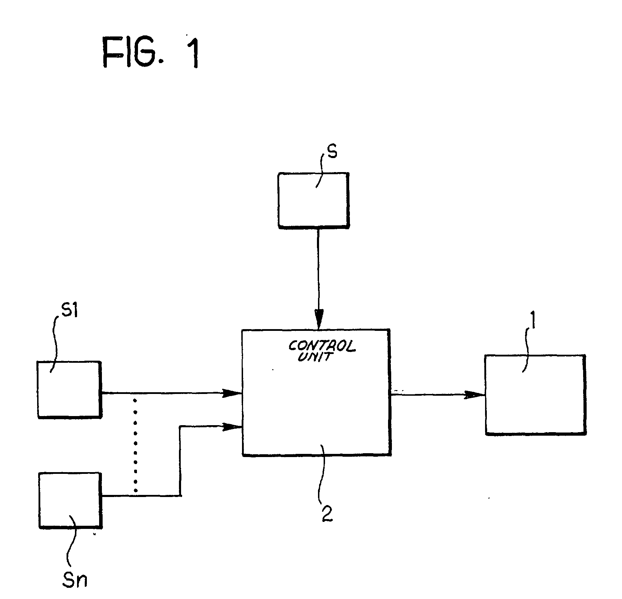

With reference to Figure 1, a system according to the invention comprises a driver circuit 1 for controlling the activation of an air-bag, this circuit being of a known type which can bring about inflation of an air-bag (not shown) by the firing of a pyrotechnic charge.

The driver circuit 1 is controlled by an electronic unit 2 on the basis of the analysis of signals supplied thereto by a plurality of sensors S1 ...Sn. These sensors may comprise, for example, an accelerometer for supplying electrical signals indicative of the acceleration/deceleration of the motor vehicle, or sensors for detecting the position of the driver and/or the front passenger relative to the passenger compartment of the motor vehicle, etc.

In the system according to the invention, a further sensor S associated with the windscreen of the motor vehicle is connected to the control unit 2. The sensor S is arranged to supply a signal to the control unit 2 when a foreign body outside the motor vehicle is situated less than a predetermined distance from the windscreen.

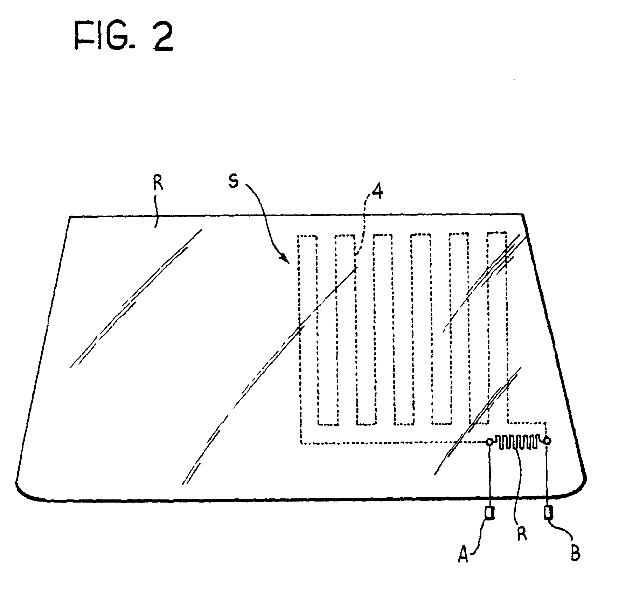

As will be described with reference to Figure 2, the sensor S associated with the windscreen is formed so as to supply a signal when the windscreen is broken.

In the embodiment shown by way of example in Figure 2, a sensor S associated with the windscreen 3 of the motor vehicle comprises a track 4 of conductive or resistive material which extends over a substantial portion of the surface of the windscreen. In the embodiment shown, the track 4 is serpentine in shape and extends between two connection terminals A and B which are intended to be connected to the control unit 2 by means of suitable insulated electrical conductors.

The track 4 may be applied to the internal face of the windscreen 3 by known silk-screen deposition techniques or may be incorporated in the windscreen in the course of its manufacture.

The control unit 2 is arranged to recognize a broken condition of the windscreen 3 such as to cause an interruption of the conductive or resistive track 4 and then to bring about inflation of the air-bag by means of the driver circuit 1.

Advantageously but not necessarily, in order to prevent inappropriate activation of the air-bag as a result of a bad contact between the terminals A, B and the conductors which connect these terminals to the control unit 2, a resistor R of predetermined resistance may be connected in parallel with the track 4. The resistor R is preferably also carried by the windscreen 3 but has dimensions much smaller than those of the track 4 to avoid the risk of simultaneous interruption of the track 4 and of the resistor in the event of a body striking the windscreen. The resistor R preferably has a resistance much higher than that of the track 4.

With the addition of the resistor R, the control unit 2 is arranged to detect the overall resistance of the track 4 and of the resistor R in parallel therewith and to recognize the broken condition of the windscreen 3 when the overall resistance is substantially equal to the resistance of the resistor R alone.

In fact, when the windscreen 3 is intact and the contact between the terminals A and B and the conductors for connection to the unit 2 is good, the overall resistance of the track 4 and of the resistor R in parallel therewith is clearly less than the resistance of the resistor R alone. In the event of a body striking the windscreen so as to break the track 4, the resistance "seen" by the control unit 2 between the terminals A and B becomes substantially equal to the resistance of the resistor R alone.

The unit 2 may also be arranged to recognize a condition of bad contact or even disconnection between the terminals A, B and the conductors for connection to the unit since, in this situation, the resistance "seen" by the unit 2 becomes very large, clearly greater than the resistance of the resistor R and tending towards a theoretically infinite value.

Moreover, the control unit 2 may also be arranged to bring about activation of the air-bag only if the motor vehicle is in motion. This situation can be detected by the unit 2 on the basis of an analysis of the signals supplied by one or more of the sensors S₁ to Sₙ.

The inflation of the air-bag at the right time in the event of a foreign body striking the windscreen of the motor vehicle achieves effective protection of the driver and/or of the front passenger.

The conductive or resistive track 4 can also be used for defrosting or demisting the windscreen.

Naturally, the principle of the invention remaining the same, the forms of embodiment and details of construction may be varied widely with respect to those described and illustrated purely by way of non-limiting example. The scope of the invention is only defined in the appended claims.

## Claims

1. A system for controlling the activation of an air-bag for protecting the driver and/or the front passenger of a motor vehicle, comprising:
a circuit (1) for controlling the activation of the air-bag,
sensor means (S, S1 ... Sn) for supplying electrical signals indicative of operative conditions of the motor vehicle, and
an electronic control unit (2) arranged to analyse the signals supplied by the sensor means (S, S1 ... Sn) and to control the circuit for controlling the activation of the air-bag (1) in accordance with predetermined procedures,
the system being **characterized in that** the sensor means comprise a sensor (S) associated with the windscreen (3) of the motor vehicle for supplying a signal to the control unit (2) when a foreign body capable of striking the windscreen from outside the motor vehicle is situated less than a predetermined distance from the windscreen (3), and **in that**
the control unit (2) is arranged to control the circuit (1) for controlling the activation of the air-bag when the sensor (S) associated with the windscreen (3) supplies such a signal;
the sensor (S) comprising a track (4) of conductive or resistive material applied to or incorporated in the windscreen (3) and having its ends (A, B) connected to the control unit (2); the arrangement being such that the track (4) is interrupted when the windscreen (3) is broken;
a resistor (R) of predetermined resistance being connected in parallel with the track (4),
the resistor (R) being also applied to or incorporated in the windscreen (3) and having dimensions smaller than those of the track (4).

2. A system according to Claim 1, **characterized in that** the resistor (R) has a resistance greater than that of the track (4).

3. A system according to Claim 1 or Claim 2, **characterized in that** the control unit (2) is arranged to detect the overall resistance of the track (4) and of the resistor (R) in parallel therewith and to recognize a broken condition of the windscreen (3) when the overall resistance is substantially equal to the resistance of the resistor (R) connected in parallel with the track (4).

4. A system according to any one of the preceding claims, **characterized in that** the control unit (2) is arranged to bring about activation of the air-bag as a result of the emission of the signal by the sensor (S) associated with the windscreen (3) only if the motor vehicle is in motion.

## Patentansprüche

1. System zum Steuern der Aktivierung eines Airbags zum Schutz des Lenkers und/oder des Beifahrers eines Kraftfahrzeugs, wobei das System enthält:
eine Stufe (1), um die Aktivierung des Airbags zu steuern,
eine Fühlereinheit (S, S1 ... Sn), um elektrische Signale zu liefern, die Betriebszustände des Kraftfahrzeugs anzeigen, und
eine elektronische Steuereinheit (2), die so aufgebaut ist, um die von der Fühlereinheit (S, S1 ... Sn) gelieferten Signale zu analysieren und die Stufe (1), mit der die Aktivierung des Airbags gesteuert wird, in Übereinstimmung mit vorgegebenen Vorgängen zu steuern,
wobei das System **dadurch gekennzeichnet ist, dass** die Fühlereinrichtung einen Fühler (S) enthält, der der Windschutzscheibe (3) des Kraftfahrzeugs zugeordnet ist, um für die Steuereinheit (2) dann ein Signal zu liefern, wenn ein Fremdkörper, der die Windschutzscheibe von außerhalb des Kraftfahrzeugs treffen kann, weniger als um einen vorgegebenen Abstand von der Windschutzscheibe (3) angeordnet ist, und dass
die Steuereinheit (2) so aufgebaut ist, dass sie die Stufe (1) so steuert, um die Aktivierung des Airbags dann zu steuern, wenn der der Windschutzscheibe (3) zugeordnete Fühler (S) ein derartiges Signal liefert;
der Fühler (S) eine Bahn (4) aus einem leitenden Material oder aus einem Widerstandsmaterial enthält, die auf der Windschutzscheibe (3) aufgebracht oder in diese eingeschlossen ist und deren Enden (A, B) mit der Steuereinheit (2) verbunden sind; wobei der Aufbau so erfolgt, dass die Bahn (4) unterbrochen wird, wenn die Windschutzscheibe (3) zerbrochen wird;
ein Widerstand (R) mit einem vorgegebenen Widerstandswert parallel zur Bahn (4) geschaltet wird;
der Widerstand (R) ebenfalls auf der Windschutzscheibe (3) aufgebracht oder in diese eingeschlossen wird, wobei er Abmessungen besitzt, die kleiner als die Abmessungen der Bahn (4) sind.

2. System gemäß Anspruch 1, **dadurch gekennzeichnet, dass** der Widerstand (R) einen Widerstandswert besitzt, der größer als der Widerstandswert der Bahn (4) ist.

3. System gemäß Anspruch 1 oder Anspruch 2, **dadurch gekennzeichnet, dass** die Steuereinheit (2) so aufgebaut ist, dass sie den Gesamtwiderstandswert der Bahn (4) und des parallel geschalteten Widerstands (R) abtastet und einen Bruch der Windschutzscheibe (3) erkennt, wenn der Gesamtwiderstandswert im Wesentlichen gleich dem Widerstandswert des Widerstands (R) ist, der parallel zur Bahn (4) liegt.

4. System gemäß irgendeinem der bisherigen Ansprüche, **dadurch gekennzeichnet, dass** die Steuereinheit (2) so aufgebaut ist, dass sie nur dann, wenn sich das Fahrzeug in Bewegung befindet, eine Aktivierung des Airbags hervorruft, wenn von dem der Windschutzscheibe (3) zugeordneten Fühler (S) das Signal abgegeben wird.

## Revendications

1. Système de commande de l'activation d'un sac gonflable destiné à protéger le conducteur et/ou le passager avant d'un véhicule à moteur, comprenant :
un circuit (1) de commande de l'activation du sac gonflable,
un dispositif à capteur (S, S1,... Sn) destiné à transmettre des signaux électriques représentatifs des conditions de fonctionnement du véhicule à moteur, et
une unité électronique de commande (2) disposée afin qu'elle analyse les signaux transmis par le dispositif à capteur (S, S1,... Sn) et commande le circuit pour la commande de l'activation du sac gonflable (1) en fonction de procédures prédéterminées,
le système étant **caractérisé en ce que** le dispositif à capteur comprend un capteur (S) associé au pare-brise (3) du véhicule à moteur et destiné à transmettre un signal à l'unité de commande (2) lorsqu'un corps étranger capable de frapper le pare-brise depuis l'extérieur du véhicule à moteur est à une distance inférieure à une distance prédéterminée du pare-brise (3), et **en ce que**
l'unité de commande (2) est destinée à commander le circuit (1) de commande de l'activation du sac gonflable lorsque le capteur (S) associé au pare-brise (3) transmet le signal,
le capteur (S) comprenant une piste (4) d'un matériau conducteur ou résistif appliquée ou incorporée au pare-brise (3) et dont les extrémités (A, B) sont connectées à l'unité de commande (2), la disposition étant telle que la piste (4) est interrompue lorsque le pare-brise (3) est brisé,
une résistance (R) de valeur prédéterminée étant connectée en parallèle avec la piste (4),
la résistance (R) étant aussi appliquée ou incorporée au pare-brise (3) et ayant des dimensions inférieures à celles de la piste (4).

2. Système selon la revendication 1, **caractérisé en ce que** la résistance (R) a une valeur supérieure à celle de la piste (4).

3. Système selon la revendication 1 ou 2, **caractérisé en ce que** l'unité de commande (2) est destinée à détecter la résistance globale de la piste (4) et de la résistance (R) montée en parallèle avec elle, et à reconnaître un état de rupture du pare-brise (3) lorsque la résistance globale est pratiquement égale à la valeur de la résistance (R) connectée en parallèle à la piste (4).

4. Système selon l'une quelconque des revendications précédentes, **caractérisé en ce que** l'unité de commande (2) est destinée à assurer l'activation du sac gonflable à la suite de l'émission du signal par le capteur (S) associé au pare-brise (3) uniquement lorsque le véhicule à moteur est en mouvement.
